# EUROPEAN PATENT APPLICATION

(11) **EP 4 692 912 A1**
(43) Date of publication of application: **11.02.2026**
(21) Application number: 24779416.7
(22) Date of filing: 12.03.2024
(51) Int. Cl.: G02C 7/10, G02B 5/22

(54) **SPECTACLE LENS**

(30) Priority: 24.03.2023 JP 2023048716
(71) Applicant: Nikon-Essilor Co., Ltd., Tokyo 130-0026 (JP)
(72) Inventor: TAKEDOMI, Yuka, Tokyo 130-0026 (JP)
(74) Representative: Viering, Jentschura & Partner mbB Patent- und Rechtsanwälte
(86) International application number: PCT/JP2024/009573
(87) International publication number: WO 2024/203286

(57) **Abstract**

An object of the present disclosure is to provide a spectacle lens capable of improving the contrast sensitivity. The spectacle lens of the present disclosure includes a colorant-dyed lens base obtained by dying a lens base with a colorant. A difference between a luminous transmittance of the lens base and a luminous transmittance of the colorant-dyed lens base is 1.0% to 4.0%, a difference between an average transmittance of the lens base in a wavelength range of 530 to 570 nm and an average transmittance of the colorant-dyed lens base in a wavelength range of 530 to 570 nm is 1.0% to 5.0%, a transmittance of the spectacle lens at a wavelength of 400 nm is 2.0% or less, and an average transmittance of the spectacle lens in a wavelength range of 415 to 440 nm is 40.0% to 80.0%.

## Description

### TECHNICAL FIELD

The present disclosure relates to a spectacle lens.

### BACKGROUND ART

As a spectacle lens, Patent Literature 1 discloses a spectacle lens dyed with a specific dye, for example.

### CITATION LIST

### PATENT LITERATURE

Patent Literature 1: JP 2013-054275 A

### SUMMARY OF INVENTION

The present disclosure relates to spectacle lenses of a first embodiment to a third embodiment.

### BRIEF DESCRIPTION OF DRAWINGS

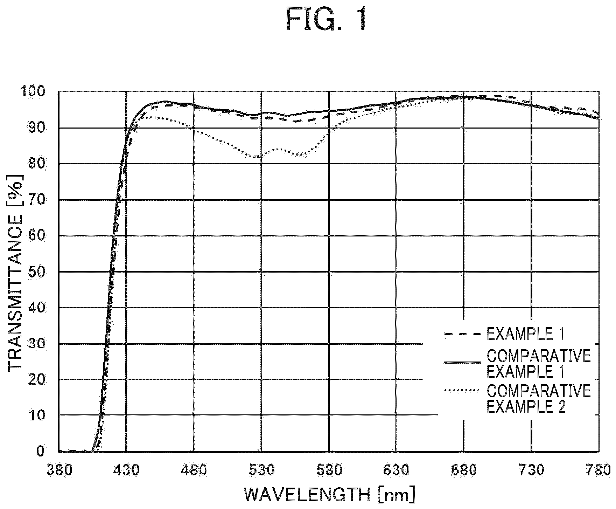

[FIG. 1] FIG. 1 shows transmission spectra of spectacle lenses of Example 1, Comparative Example 1, and Comparative Example 2.

### DESCRIPTION OF EMBODOIMENT

Spectacle lenses of a first embodiment to a third embodiment of the present disclosure are described below in detail.

The spectacle lens of the present disclosure can improve the contrast sensitivity of a subject when the subject wears the spectacle lens of the present disclosure.

In the present description, numerical values given before and after "to" are meant to be included in the range as the lower and upper limits thereof.

### [First embodiment]

A spectacle lens of the first embodiment is a spectacle lens comprising a colorant-dyed lens base obtained by dying a lens base with a colorant, wherein a difference (absolute value) between a luminous transmittance of the lens base and a luminous transmittance of the colorant-dyed lens base is 1.0% to 4.0%, a difference (absolute value) between an average transmittance of the lens base in a wavelength range of 530 to 570 nm and an average transmittance of the colorant-dyed lens base in a wavelength range of 530 to 570 nm is 1.0% to 5.0%, a transmittance of the spectacle lens at a wavelength of 400 nm is 2.0% or less, and an average transmittance of the spectacle lens in a wavelength range of 415 to 440 nm is 40.0% to 80.0%.

In the spectacle lens of the first embodiment, the difference (absolute value) between the luminous transmittance of the lens base and the luminous transmittance of the colorant-dyed lens base is 1.0% to 4.0%, preferably 1.5% to 3.0%, and more preferably 1.5% to 2.5%. It is preferable that the luminous transmittance of the lens base be higher than the luminous transmittance of the colorant-dyed lens base.

The difference (absolute value) between the average transmittance of the lens base in a wavelength range of 530 to 570 nm and the average transmittance of the colorant-dyed lens base in a wavelength range of 530 to 570 nm is 1.0% to 5.0%, preferably 2.0% to 4.0%, and more preferably 2.5% to 3.5%. It is preferable that the average transmittance of the lens base in a wavelength range of 530 to 570 nm be higher than the average transmittance of the colorant-dyed lens base in a wavelength range of 530 to 570 nm.

The transmittance of the spectacle lens at a wavelength of 400 nm is 2.0% or less, preferably 1.0% or less, and more preferably 0.05% or less. The lower the transmittance at a wavelength of 400 nm, the better (for example, 0% or more).

The average transmittance of the spectacle lens in a wavelength range of 415 to 440 nm is 40.0% to 80.0%, preferably 50.0% to 75.0%, and more preferably 55.0% to 73.0%.

The luminous transmittance of the spectacle lens is preferably 86.0% to 97.0% and more preferably 89.0% to 94.0%.

The average transmittance of the spectacle lens in a wavelength range of 450 to 500 nm is preferably 80.0% or more, more preferably 90.0% or more, and even more preferably more than 93.0%. The upper limit thereof is preferably 100.0% or less and more preferably 98.0% or less.

The average transmittance of the spectacle lens in a wavelength range of 530 to 570 nm is preferably 80.0% to 95.0%, more preferably 85.0% to 93.0%, and even more preferably 90.0% to 93.0%.

The average transmittance of the spectacle lens in a wavelength range of 600 to 650 nm is preferably 80.0% or more, more preferably 90.0% or more, and even more preferably more than 93.0%. The upper limit thereof is preferably 100.0% or less, and more preferably 98.0% or less.

In the spectacle lens, the average transmittance in a wavelength range of 530 to 570 nm is preferably lower than both the average transmittance in a wavelength range of 450 to 500 nm and the average transmittance in a wavelength range of 600 to 650 nm, and more preferably lower than both the average transmittance in a wavelength range of 450 to 500 nm and the average transmittance in a wavelength range of 600 to 650 nm by 2.0% or more (preferably 2.0% to 5.0% and more preferably 3.0% to 5.0%).

The luminous transmittance is a value measured according to T 7333:2018.

The transmittance and the average transmittance are values measured by the following method.

A transmission spectrum of a measurement object such as a lens base, a colorant-dyed lens base, or a spectacle lens is obtained on an optical axis of the measurement object by use of a spectrophotometer. Specifically, the measurement object is set on the spectrophotometer, and the transmittance at 5 nm interval in a wavelength range of 380 to 780 nm is measured to obtain a transmittance spectrum.

The transmittance is a transmittance at a specific wavelength in the obtained transmittance spectrum. The average transmittance is a value obtained by arithmetic mean calculation of transmittances at wavelengths at 5 nm intervals in a specific wavelength range in the obtained transmittance spectrum. For instance, the average transmittance in a wavelength range of 530 to 570 nm is a value obtained by arithmetic mean calculation of transmittances at wavelengths of 530 nm, 535 nm, 540 nm, 545 nm, ..., and 570 nm.

It should be noted that among the foregoing optical characteristics, values of the luminous transmittance, the transmittance, and the average transmittance except for relative values (e.g., the difference in luminous transmittance and the difference in average transmittance) are values when the measurement object has a center thickness of 2.0 mm. In the case where the center thickness of a measurement object is not 2.0 mm, three or more measurement objects with different center thicknesses (e.g., 1.0 mm thickness, 3.0 mm thickness, and 5.0 mm thickness) are prepared, the luminous transmittance, the transmittance, and the average transmittance of those measurement objects are measured by the method described above, and calibration curves are made for the relations between the center thickness of a measurement object and the luminous transmittance and the like. The conversion values for a measurement object with a center thickness of 2.0 mm are obtained from the calibration curves, and the thus-obtained values are used.

In the case where a spectacle lens being a measurement object has a functional layer and conversion values are calculated using calibration curves as above with respect to the spectacle lens, it is preferable to prepare three or more spectacle lenses each of which has a functional layer same (same thickness and same components) as the functional layer of the spectacle lens being a measurement object and which are different only in center thickness of the colorant-dyed lens base, make calibration curves using the prepared spectacle lenses, and then calculate conversion values for the measurement object with a center thickness of 2.0 mm using the calibration curves.

Exemplary methods of adjusting the foregoing optical characteristics include a method involving modification of the type and content of a colorant and the type of a lens base.

The thickness of the spectacle lens is preferably 0.8 to 30.0 mm and more preferably 1.0 to 10.0 mm. The thickness of the spectacle lens is the center thickness of the spectacle lens measured with a dial gauge.

### <Colorant-dyed lens base>

The spectacle lens includes a colorant-dyed lens base.

The colorant-dyed lens base is a base obtained by dying a lens base with a colorant and is a member supporting a functional layer that may be included in the spectacle lens.

### (Lens base)

The lens base is a base before being dyed into the colorant-dyed lens base, and the colorant-dyed lens base is obtained by dying the lens base with a colorant.

The lens base may or may not contain a colorant. In other words, a colorant-containing lens base may be further dyed with a colorant to obtain the colorant-dyed lens base.

In particular, as the lens base, a lens base containing a colorant as a bluing agent is favorable.

Examples of the lens base include lens bases constituted of organic materials (plastics) and those constituted of inorganic materials, and a plastic lens base is preferred.

Examples of the lens base include a finished lens that is obtained by optically finishing the convex and concave surfaces and shaping the lens according to a desired power, a semi-finished lens whose convex surface is solely finished as an optical surface (e.g., a spherical surface, a rotationally symmetric aspheric surface, and a progressive surface), and a lens obtained by processing and polishing the concave surface of a semi-finished lens according to the prescription of the wearer.

Exemplary organic materials include acrylic ester resin, methacrylic acid ester resin, thiourethane resin, allyl resin, episulfide resin, polycarbonate, urethane resin, polyester, polystyrene, polyethersulfone, poly-4-methylpentene-1, and diethylene glycol bis(allyl carbonate) resin (CR-39), and preferred is thiourethane resin, episulfide resin, or diethylene glycol bis(allyl carbonate) resin.

Thiourethane resin is a resin obtained by polymerization of a polyisocyanate compound and a polythiol compound.

Preferable examples of the polyisocyanate compound include m-xylylene diisocyanate, a mixture of 2,5-bis(isocyanatomethyl)-bicyclo[2,2,1]heptane and 2,6-bis(isocyanatomethyl)-bicyclo[2,2,1]-heptane, isophorone diisocyanate, hexamethylene diisocyanate, and tolylene diisocyanate.

Preferable examples of the polythiol compound include pentaerythritol tetrakis(3-mercaptopropionate), 1,2-bis[(2-mercaptoethyl)thio]-3-mercaptopropane, and a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane.

The episulfide resin is a resin obtained by ring-opening polymerization of a monomer having an episulfide group (epithio group) or a mixed monomer containing the monomer.

Preferable examples of the monomer having an episulfide group include bis(2,3-epithiopropyl)sulfide and bis(2,3-epithiopropyl)disulfide.

When the lens base contains a colorant, the lens base may be a lens base formed using a mixture of a colorant and materials composing the lens base, or a lens base including a colorant-containing layer.

For the lens base, a blue light blocking lens base is preferred because the contrast sensitivity improves.

The luminous transmittance of the lens base is preferably 80.0% to 97.0% and more preferably 85.0% to 92.0%.

The transmittance of the lens base at a wavelength of 400 nm is preferably 5.0% or less, more preferably 2.0% or less, and even more preferably 0.05% or less. The lower the transmittance at a wavelength of 400 nm, the better (for example, 0% or more).

The average transmittance of the lens base in a wavelength range of 415 to 440 nm is preferably 30.0% to 90.0%, more preferably 40.0% to 80.0%, even more preferably 45.0% to 70.0%, and particularly preferably 50.0% to 60.0%.

The average transmittance of the lens base in a wavelength range of 450 to 500 nm is preferably 70.0% to 99.0% and more preferably 80.0% to 95.0%.

The average transmittance of the lens base in a wavelength range of 530 to 570 nm is preferably 70.0% to 99.0% and more preferably 80.0% to 95.0%.

The average transmittance of the lens base in a wavelength range of 600 to 650 nm is preferably 70.0% to 99.0% and more preferably 80.0% to 95.0%.

The luminous transmittance, the transmittance, and the average transmittance can be measured in the same manners as described above.

Exemplary methods of adjusting the foregoing optical characteristics include a method involving modification of the type and content of a colorant and the type of the lens base.

The thickness of the lens base is preferably 0.8 to 30.0 mm and more preferably 1.0 to 10.0 mm in terms of handleability. The thickness of the lens base is the center thickness of the lens base measured with a dial gauge.

The refractive index of the lens base is preferably 1.50 or more, more preferably 1.60 to 1.80, and even more preferably 1.60 to 1.74.

### (Colorant)

Examples of the colorant include inorganic dyes, inorganic pigments, organic dyes, and organic pigments. In other words, the colorant may be any of inorganic substances, organic substances, dyes thereof, pigments thereof, and mixtures thereof.

When the lens base contains a colorant, a colorant other than the colorant contained in the lens base is preferably employed as the colorant used to obtain the colorant-dyed lens base.

Examples of inorganic dyes and organic dyes include disperse dyes, reactive dyes, direct dyes, composite dyes, acid dyes, metal complex dyes, vat dyes, sulfur dyes, fluorescent dyes, phosphorescent dyes, and dyes for resin coloring.

Examples of inorganic dyes and inorganic pigments include: fine particles of metals such as gold, silver, aluminum, and nickel; and fine particles of metal oxides such as titanium oxide, silicon oxide, and aluminum oxide.

As an organic dye, preferred is an organic dye having a heteroatom (e.g., nitrogen atom and oxygen atom), and more preferred is an azo dye, a pyrazolone dye, a quinoline dye, or a cyanine dye.

Exemplary commercial products of organic dyes include: FDG-002, FDG-004, and FDG-006 manufactured by Yamada Chemical Co., Ltd.; ABS 511, ABS 527, and ABS 556 manufactured by Exciton; and RDW R60 manufactured by FUJIFILM Wako Pure Chemical Corporation.

Examples of organic dyes include a red dye, a blue dye, a brown dye, a violet dye, an orange dye, and a black dye, and a red dye is preferred because the optical characteristics of a colorant-dyed lens base and a spectacle lens base can be modified.

Examples of the red dye include: Kayalon Polyester Red (Kayalon Microester Red) AUL-S, Kayalon Microester Red 5L-E, Kayalon Microester Red C-LS conc, Kayalon Microester Red DX-LS, Kayalon Polyester Red AN-SE, Kayalon Polyester Red B-LE, and Kayaron Polyester Rubine GL-SE 200 (manufactured by Nippon Kayaku Co., Ltd.); Kiwalon Polyester Red ESP and Kiwalon Polyester Red KN-SE (manufactured by Kiwa Chemical Industry Co., Ltd.); FSP-Red BL (manufactured by Futaba Sangyo Co., Ltd.); and Dianix Red (manufactured by DyStar Japan Ltd.).

Examples of the blue dye include: Kayalon Polyester Blue AUL-S dye (manufactured by Nippon Kayaku Co., Ltd.); Dianix Blue AC-E (manufactured by DyStar Japan Ltd.); Kiwalon Polyester Blue ESP, and Kiwalon Polyester Blue KN-SE (manufactured by Kiwa Chemical Industry Co., Ltd.); Kayalon Microester Blue AQ-LE, Kayaron Microester Blue 5L-E, Kayalon Microester Blue C-LS conc, Kayalon Microester Blue DX-LS conc, Kayalon Polyester Blue AN-SE, and Kayaron Polyester Blue AUL-S(N) (manufactured by Nippon Kayaku Co., Ltd.); and FSP-Blue AUL-S (manufactured by Futaba Sangyo Co., Ltd.).

One or more of the colorants may be used alone or in combination.

The colorant content can be suitably adjusted in accordance with desired optical characteristics of the colorant-dyed lens base.

A method of obtaining the colorant-dyed lens base by dying the lens base with the colorant is described in detail below.

Exemplary methods of dying the lens base with the colorant include a method in which the colorant is allowed to permeate the lens base.

A preferable method of permeation of the colorant into the lens base is a method in which the colorant is allowed to permeate by use of a colorant liquid containing the colorant.

The colorant liquid preferably contains the colorant, a surfactant, and a solvent.

Examples of the surfactant include ionic surfactants (e.g., anionic surfactants and cationic surfactants) and nonionic surfactants.

Examples of the solvent include water and an organic solvent. Examples of the organic solvent include an alcoholic solvent, a ketone solvent, an ether solvent, an ester solvent, a hydrocarbon solvent, a halogenated hydrocarbon solvent, an amide solvent, a sulfone solvent, and a sulfoxide solvent.

The colorant liquid may contain additives such as a pH adjuster, a viscosity modifier, a leveling agent, a flatting agent, a stabilizer, an ultraviolet absorber, and an antioxidant.

The colorant content is preferably 0.001 to 10 mass% and more preferably 0.01 to 5 mass% with respect to the total mass of the colorant liquid.

The surfactant content is preferably 0.001 to 10 mass% and more preferably 0.005 to 5 mass% with respect to the total mass of the colorant liquid.

Examples of the method of permeation of the colorant into the lens base include the following methods, and a dipping method is preferred.

Coating method: The colorant liquid is coated on a surface of the lens base and heated, thus allowing the colorant to permeate the surface of the lens base.

Dipping method: The lens base is immersed in a heated colorant liquid, thus allowing the colorant to permeate a surface of the lens base.

Sublimation dying method: A sublimable colorant is coated on a transfer medium, and the lens base is disposed near the transfer medium and heated, thus allowing the colorant to permeate a surface of the lens base.

In the coating method, exemplary methods of coating include brush coating, dipping, spin coating, roll coating, spray coating, flow coating, and inkjet application. One surface or opposite surfaces of the lens base may be coated.

The heating temperature in the coating method is preferably 70°C to 180°C. The heating time in the coating method is preferably 10 to 180 minutes.

Examples of the heating method include air oven heating, infrared irradiation heating, and ultraviolet irradiation heating.

In the coating method, the gradient of color concentration can be generated by, after coating the colorant liquid, heating it such that a heated region is gradually changed.

The colorant-dyed lens base obtained by the coating method may be further cleaned.

A cleaning method is preferably a wiping method using an organic solvent or a method using an alkaline cleaner.

The dipping method is preferably performed by immersing the lens base in the colorant liquid heated to 80°C to 95°C.

The colorant-dyed lens base obtained by the dipping method may be further cleaned.

A cleaning method is for example a wiping method using a solvent.

The colorant-dyed lens base may contain additives such as a light stabilizer, an ultraviolet absorber, and an antioxidant.

The luminous transmittance of the colorant-dyed lens base is preferably 75.0% to 90.0% and more preferably 80.0% to 88.0%.

The transmittance of the colorant-dyed lens base at a wavelength of 400 nm is preferably 5.0% or less, more preferably 2.0% or less, and even more preferably 0.05% or less. The lower the transmittance at a wavelength of 400 nm, the better (for example, 0% or more).

The average transmittance of the colorant-dyed lens base in a wavelength range of 415 to 440 nm is preferably 20.0% to 80.0%, more preferably 30.0% to 70.0%, and even more preferably 40.0% to 60.0%.

The average transmittance of the colorant-dyed lens base in a wavelength range of 450 to 500 nm is preferably 75.0% to 95.0% and more preferably 80.0% to 90.0%.

The average transmittance of the colorant-dyed lens base in a wavelength range of 530 to 570 nm is preferably 70.0% to 90.0% and more preferably 80.0% to 90.0%.

The average transmittance of the colorant-dyed lens base in a wavelength range of 600 to 650 nm is preferably 75.0% to 95.0% and more preferably 80.0% to 90.0%.

The luminous transmittance, the transmittance, and the average transmittance can be measured in the same manners as described above.

Exemplary methods of adjusting the foregoing optical characteristics include a method involving modification of the type and content of the colorant and the type of the lens base.

In the colorant-dyed lens base, the average transmittance in a wavelength range of 530 to 570 nm is preferably lower than both the average transmittance in a wavelength range of 450 to 500 nm and the average transmittance in a wavelength range of 600 to 650 nm, and more preferably lower than both the average transmittance in a wavelength range of 450 to 500 nm and the average transmittance in a wavelength range of 600 to 650 nm by 2.0% or more (preferably 2.0% to 5.0% and more preferably 3.0% to 5.0%).

The thickness of the colorant-dyed lens base is preferably 0.8 to 30.0 mm and more preferably 1.0 to 10.0 mm in terms of handleability. The thickness of the colorant-dyed lens base is the center thickness of the colorant-dyed lens base measured with a dial gauge.

The refractive index of the colorant-dyed lens base is preferably 1.50 or more, more preferably 1.60 to 1.80, and even more preferably 1.60 to 1.74.

### <Functional layer>

The spectacle lens may have a functional layer.

Examples of the functional layer include a primer layer, a hard coat layer, an antireflection layer, a water and oil repellent layer, and a colorant layer.

The functional layer may contain a colorant by the above-described method of dying the lens base with the colorant. Examples of the colorant include those colorants that may be contained in the colorant-dyed lens base.

When the spectacle lens has the functional layer, it is preferable that the spectacle lens have the colorant-dyed lens base, a primer layer, a hard coat layer, and an antireflection layer in this order.

The functional layer may be provided on at least one surface or both surfaces of the colorant-dyed lens base.

### (Primer layer)

The spectacle lens may have a primer layer.

The primer layer improves the adhesion between the colorant-dyed lens base and a hard coat layer, so that the impact resistance of the spectacle lens can improve.

The primer layer preferably contains resin. The resin may be in a particulate form.

Examples of the resin include urethane resin, epoxy resin, phenol resin, polyimide, polyester, bismaleimide resin, and polyolefin, and urethane resin is preferred.

The primer layer may contain the foregoing colorant and additives such as a surfactant.

One example of a primer layer forming method is a method involving applying a primer layer-forming composition containing resin onto the colorant-dyed lens base, optionally followed by curing treatment, thereby forming the primer layer.

Examples of a method of applying the primer layer-forming composition include dip coating, spin coating, spray coating, ink jet coating, and flow coating.

When dip coating is employed for instance, the colorant-dyed lens base is immersed in the primer layer-forming composition and then pulled out and dried, whereby a coating film derived from the primer layer-forming composition can be formed on the colorant-dyed lens base.

The thickness of the primer layer is preferably 0.3 to 2.0 µm.

### (Hard coat layer)

The spectacle lens may have a hard coat layer.

When the spectacle lens has a hard coat layer, the impact resistance of the spectacle lens can improve.

The hard coat layer preferably has "H" or higher hardness in terms of pencil hardness according to JIS K 5600.

As a hard coat film, for instance, known hard coat films are applicable. Specific examples thereof include a urethane hard coat film for improving the impact resistance and a silicone hard coat film for improving the impact resistance. Examples of the hard coat film include a layer made of a silicon-based hard coat composition, and preferred is a layer made of a silicon-based hard coat composition containing (A) metal oxide particles, (B) an organosilicon compound or a hydrolysate thereof, and (C) a curing catalyst.

Examples of (A) the metal oxide particles include fine particles of metal oxides such as iron oxide, zinc oxide, aluminum oxide, titanium oxide, zirconium oxide, tin oxide, beryllium oxide, antimony oxide, tungsten oxide, and cerium oxide. A single kind of the metal oxide particles or two or more kinds thereof may be used. Alternatively, use may be made of composite metal oxide fine particles composed of two or more metal oxides selected from those metal oxides. The average particle size of the metal oxide fine particles or the composite metal oxide fine particles is preferably 1 to 100 nm.

The metal oxide particles are preferably the ones that solate when dispersed in water, methanol, or another organic solvent.

### (B) The organosilicon compound or a hydrolysate thereof is preferably a compound represented by Formula (B).

R¹ₐR²_{b}Si(OR³)_{4-(a+b)} .. (B)

In Formula (B), R¹ represents an organic group having a functional group or an organic group having 4 to 14 carbon atoms and having an unsaturated double bond. R² represents a hydrocarbon group having 1 to 6 carbon atoms or a halogenated hydrocarbon group. R³ represents an alkyl group with 1 to 4 carbon atoms, alkoxyalkyl group, or acyl group. a and b each independently represent 0 or 1. a + b is 1 or 2.

Examples of the compound represented by Formula (B) include γ-glycidoxypropyltrimethoxysilane, γ-glycidoxypropyltriethoxysilane, γ-glycidoxypropyltriacetoxysilane, γ-glycidoxypropylmethyldimethoxysilane, γ-glycidoxypropylmethyldiethoxysilane, and β-(3,4-epoxycyclohexyl)ethyltriethoxysilane.

Examples of the compound represented by Formula (B) except for compounds in which R¹ has an epoxy group as a functional group (including the case where a represents 0) include trialkoxysilanes, triacyloxysilanes, and trialcoxyalkoxysilanes, such as methyltrimethoxysilane, methyltriethoxysilane, vinyltrimethoxysilane, vinyltriethoxysilane, vinyltriacetoxysilane, vinyltrimethoxyethoxysilane, γ-methacryloxypropyltrimethoxysilane, aminomethyltrimethoxysilane, 3-aminopropyltrimethoxysilane, 3-aminopropyltriethoxysilane, phenyltrimethoxysilane, phenyltriethoxysilane, γ-chloropropyltrimethoxysilane, γ-mercaptopropyltriethoxysilane, and 3,3,3-trifluoropropyltrimethoxysilane.

Examples of (C) the curing catalyst include metal alkoxides, organic metal salts, tin compounds, amines (see JP 2004-315556 A), phosphines, quaternary ammonium salts, quaternary phosphonium salts, tertiary sulfonium salts, secondary iodonium salts, mineral acids, Lewis acids, organic acids or their anhydrides, silicic acids, tetrafluoroboric acids, peroxides, azo compounds, a condensate of aldehyde and an ammonium compound, guanidines, thioureas, thiazoles, sulfenamides, thiurams, dithiocarbamates, xanthates, and acidic phosphate esters, with quaternary ammonium salts being preferred, and triethylbenzylammonium chloride being more preferred.

Examples of (C) the curing catalyst include amines and metal complex compounds.

Examples of amines include monoethanolamine, diethanolamine, isopropanolamine, ethylenediamine, isopropylamine, diisopropylamine, morpholine, triethanolamine, diaminopropane, aminoethylethanolamine, dicyandiamide, triethylenediamine, and 2-ethyl-4-methylimidazole.

Examples of metal complex compounds include a metal acetylacetonate complex compound and a metal chelate complex compound of ethylenediaminetetraacetic acid each of which has, as the central metal, a metal selected from Li, Zn, Mn, Mg, Fe, Cu, Co, Ca, Bi, Al, Ni, Cr, Zr, and V. Specific examples thereof include aluminum acetylacetonate, aluminum bis(ethylacetoacetate), monoacetylacetonate, aluminum-di-n-butoxide-monoethylacetoacetate, aluminum-di-iso-propoxide-monomethylacetoacetate, chromium acetylacetonate, titanyl acetylacetonate, cobalt acetylacetonate, iron(III) acetylacetonate, manganese acetylacetonate, nickel acetylacetonate, indium acetylacetonate, iron ethylenediaminetetraacetate, aluminum ethylenediaminetetraacetate, zinc ethylenediaminetetraacetate, manganese ethylenediaminetetraacetate, magnesium ethylenediaminetetraacetate, copper ethylenediaminetetraacetate, cobalt ethylenediaminetetraacetate, calcium ethylenediaminetetraacetate, and bismuth ethylenediaminetetraacetate.

Examples of metal alkoxides include aluminum triethoxide, aluminum tri-n-propoxide, aluminum tri-n-butoxide, titanium tetraethoxide, titanium tetra-n-butoxide, and titanium tetra-i-propoxide.

Examples of organic metal salts include sodium acetate, zinc naphthenate, cobalt naphthenate, and tin octylate.

Examples of perchlorates include magnesium perchlorate and ammonium perchlorate.

Examples of organic acids or their anhydrides include malonic acid, succinic acid, tartaric acid, adipic acid, azelaic acid, maleic acid, O-phthalic acid, terephthalic acid, fumaric acid, itaconic acid, oxaloacetic acid, maleic anhydride, succinic anhydride, itaconic anhydride, 1,2-dimethylmaleic anhydride, phthalic anhydride, hexahydrophthalic anhydride, and naphthalic anhydride.

Examples of Lewis acids include ferric chloride and aluminum chloride.

Examples of metal halides include stannous chloride, stannic chloride, stannic bromide, zinc chloride, zinc bromide, titanium bromide, titanium tetrachloride, thallium bromide, germanium chloride, hafnium chloride, lead chloride, and lead bromide.

One or more of the curing catalysts may be used alone or in combination.

Other than the foregoing curing catalysts, when a silane compound having an epoxy group is used as a curing catalyst, a compound which also serves to perform ring-opening polymerization of the epoxy group is usable. Specific examples thereof include an aluminum chelate compound.

When the hard coat layer is formed, for instance, a hard coat layer-forming composition containing all of the above components (A) to (C) is applied onto a surface of the colorant-dyed lens base by dipping, spraying, spin coating, or the like to form a coating film. The coating film is cured by thermal curing or photo curing, whereby the hard coat layer is formed. The heating temperature of the coating film is preferably 70°C to 140°C and more preferably 90°C to 120°C. The thickness of the coating film is preferably 1.0 to 10.0 µm and more preferably 1.5 to 4.0 µm.

The hard coat layer-forming composition may contain a solvent and/or an additive. Exemplary solvents include water, lower alcohol, acetone, ether, ketone, and ester.

Exemplary additives include a pH adjuster, a viscosity modifier, a leveling agent, a flatting agent, a dye, a pigment, a stabilizer, an ultraviolet absorber, and an antioxidant.

### (Antireflective layer)

The spectacle lens may have an antireflection layer.

When the spectacle lens has an antireflection layer, it is preferable that the spectacle lens have the hard coat layer and the antireflection layer adjacent to the hard coat layer.

The antireflection layer may have a single layer structure or a multilayer structure.

For the antireflection layer, an inorganic antireflection layer is preferred. The inorganic antireflection layer refers to an antireflection layer constituted of an inorganic compound.

The antireflection layer of multilayer structure may have a structure in which low refractive index layers and high refractive index layers are alternately stacked.

Exemplary materials constituting a high refractive index layer include oxides of titanium, zircon, aluminum, niobium, tantalum, and lanthanum. Exemplary materials constituting a low refractive index layer include silicon oxide.

Exemplary methods of forming the antireflection layer include dry methods such as vacuum evaporation, sputtering, ion plating, ion-beam assisted deposition, and CVD.

### (Water and oil repellent layer)

The spectacle lens may have a water and oil repellent layer.

When the spectacle lens has a water and oil repellent layer, it is preferable that the spectacle lens have the water and oil repellent layer as the outermost layer of the spectacle lens.

The water and oil repellent layer decreases surface energy of the spectacle lens and hence improves the contamination preventing properties and the sliding properties of the spectacle lens as well as the wear resistance of the spectacle lens.

Examples of components that may be contained in the water and oil repellent layer include a fluorine-containing compound (a compound having a fluorine atom), and preferred is an organosilicon compound having an alkyl group in which part or all of hydrogen atoms are substituted with fluorine atoms and also having a hydrolyzable group, as well as a hydrolysate thereof and a hydrolysis-condensation product thereof, because of more excellent water and oil repellency.

The hydrolyzable group is a group directly connected to a silicon atom and may promote a hydrolysis reaction and a condensation reaction, and examples thereof include an alkoxy group, a halogen atom, an acyloxy group, an alkenyloxy group, and an isocyanate group.

The hydrolysate refers to a compound obtained through hydrolysis of one or more hydrolyzable groups in the organosilicon compound. The hydrolysate may be a product obtained through hydrolysis of all the hydrolyzable groups (complete hydrolysate) or a product obtained through hydrolysis of some of the hydrolyzable groups (partial hydrolysate). That is, the hydrolysate may be a complete hydrolysate, a partial hydrolysate, or a mixture thereof.

The hydrolysis-condensation product of the organosilicon compound refers to a compound obtained through hydrolysis of one or more hydrolyzable groups in the organosilicon compound and subsequent condensation of the resulting hydrolysate. The hydrolysis-condensation product may be a product obtained through hydrolysis of all the hydrolyzable groups and subsequent condensation of the whole of the resulting hydrolysate (complete hydrolysis-condensation product) or a product obtained through hydrolysis of some of the hydrolyzable groups and subsequent condensation of part of the resulting hydrolysate (partial hydrolysis-condensation product). That is, the hydrolysis-condensation product may be a complete hydrolysis-condensation product, a partial hydrolysis-condensation product, or a mixture thereof.

An example of the method of forming the water and oil repellent layer is a method involving applying a water and oil repellent layer-forming composition onto the colorant-dyed lens base to form a coating film and subjecting the coating film to curing treatment such as light irradiation treatment.

The formation of the coating film may be followed by drying treatment such as heating treatment to remove a solvent from the coating film.

The thickness of the water and oil repellent layer is preferably 5.0 to 35.0 nm.

### (Colorant layer)

A colorant layer is not particularly limited as long as it is a layer formed using the foregoing colorant liquid by a coating method or other methods.

### (Other layers)

The spectacle lens may have other layers than the foregoing layers that may be included in the spectacle lens.

One example of other layers is a protection layer.

### [Second embodiment]

A spectacle lens of the second embodiment is a spectacle lens comprising a lens base and a functional layer containing a colorant, wherein a difference (absolute value) between a luminous transmittance of the spectacle lens and a luminous transmittance of a reference lens obtained by removing the colorant from the spectacle lens is 1.0% to 4.0%, a difference (absolute value) between an average transmittance of the spectacle lens in a wavelength range of 530 to 570 nm and an average transmittance of the reference lens in a wavelength range of 530 to 570 nm is 1.0% to 5.0%, a transmittance of the spectacle lens at a wavelength of 400 nm is 2.0% or less, and an average transmittance of the spectacle lens in a wavelength range of 415 to 440 nm is 40.0% to 80.0%.

The spectacle lens of the second embodiment as well as preferred examples thereof is the same as the spectacle lens of the first embodiment except for not having the colorant-dyed lens base, having a functional layer containing a colorant, and other factors to be described later. For example, preferred ranges of the luminous transmittance of the spectacle lens, the average transmittance of the spectacle lens in a wavelength range of 450 to 500 nm, the average transmittance of the spectacle lens in a wavelength range of 530 to 570 nm, and the average transmittance of the spectacle lens in a wavelength range of 600 to 650 nm in the second embodiment are the same as those of the respective parameters of the spectacle lens of the first embodiment described above.

In the spectacle lens, the difference (absolute value) between the luminous transmittance of the spectacle lens and the luminous transmittance of the reference lens is 1.0% to 4.0%, preferably 1.5% to 3.0%, and more preferably 1.5% to 2.5%. It is preferable that the luminous transmittance of the reference lens be higher than the luminous transmittance of the spectacle lens.

The difference (absolute value) between the average transmittance of the spectacle lens in a wavelength range of 530 to 570 nm and the average transmittance of the reference lens in a wavelength range of 530 to 570 nm is 1.0% to 5.0%, preferably 2.0% to 4.0%, and more preferably 2.5% to 3.5%. It is preferable that the average transmittance of the reference lens in a wavelength range of 530 to 570 nm be higher than the average transmittance of the spectacle lens in a wavelength range of 530 to 570 nm.

The transmittance of the spectacle lens at a wavelength of 400 nm is 2.0% or less, preferably 1.0% or less, and more preferably 0.05% or less. The lower the transmittance at a wavelength of 400 nm, the better (for example, 0% or more).

The average transmittance of the spectacle lens in a wavelength range of 415 to 440 nm is 40.0% to 80.0%, preferably 50.0% to 75.0%, and more preferably 55.0% to 73.0%.

The reference lens is a lens obtained by removing a colorant from the spectacle lens.

The reference lens is the same as the spectacle lens being a measurement object except for not containing a colorant. Specifically, compared to the spectacle lens comprising a lens base and a functional layer containing a colorant, the reference lens is a lens comprising the lens base of the spectacle lens and a functional layer that is the same as the functional layer of the spectacle lens except for not containing a colorant (i.e., a functional layer having the same components except for a colorant and having the same thickness).

The reference lens may be obtained by using the lens base and a colorant-free functional layer in manufacture of the spectacle lens.

The functional layer containing a colorant is for instance the functional layer that may be included in the spectacle lens of the first embodiment and that contains a colorant.

### [Third embodiment]

In a spectacle lens of the third embodiment, the transmittance of the spectacle lens at a wavelength of 400 nm is 2.0% or less, the average transmittance of the spectacle lens in a wavelength range of 415 to 440 nm is 40.0% to 80.0%, and in the spectacle lens, the average transmittance in a wavelength range of 530 to 570 nm is lower than both the average transmittance in a wavelength range of 450 to 500 nm and the average transmittance in a wavelength range of 600 to 650 nm.

The spectacle lens of the third embodiment preferably has the same structure as the spectacle lens of the first embodiment except for having a specific optical characteristic, and preferred examples thereof are also the same. For example, preferred ranges of the luminous transmittance of the spectacle lens, the average transmittance of the spectacle lens in a wavelength range of 450 to 500 nm, the average transmittance of the spectacle lens in a wavelength range of 530 to 570 nm, and the average transmittance of the spectacle lens in a wavelength range of 600 to 650 nm in the third embodiment are the same as those of the respective parameters of the spectacle lens of the first embodiment described above.

The transmittance of the spectacle lens at a wavelength of 400 nm is 2.0% or less, preferably 1.0% or less, and more preferably 0.05% or less. The lower the transmittance at a wavelength of 400 nm, the better (for example, 0% or more).

The average transmittance of the spectacle lens in a wavelength range of 415 to 440 nm is 40.0% to 80.0%, preferably 50.0% to 75.0%, and more preferably 55.0% to 73.0%.

In the spectacle lens, the average transmittance in a wavelength range of 530 to 570 nm is preferably lower than both the average transmittance in a wavelength range of 450 to 500 nm and the average transmittance in a wavelength range of 600 to 650 nm, and more preferably lower than both the average transmittance in a wavelength range of 450 to 500 nm and the average transmittance in a wavelength range of 600 to 650 nm by 2.0% or more (preferably 2.0% to 5.0% and more preferably 3.0% to 5.0%).

### EXAMPLES

The present disclosure is described below in further detail by way of examples; however, the present disclosure should not be construed as being limited to the following examples.

### [Example 1]

Pure water (1,000 parts by mass) was put in a container, and FSP-Red BL dye (2.0 parts by mass, manufactured by Futaba Sangyo Co., Ltd.) as a red dye and NICCA SUNSOLT #7000 (1.0 parts by mass, manufactured by Nicca Chemical Co., Ltd.) as a surfactant were added to obtain a colorant liquid.

Next, a plastic lens base (manufactured by Nikon-Essilor Co., Ltd., Nikon Lite 3ASPBUV, size: 75φ, center thickness: 2 mm) being thiourethane resin with a refractive index of 1.60 was immersed, for a short time, in the colorant liquid heated to 90°C to prepare a colorant-dyed lens base (pale red). A urethane-based primer layer with a thickness of 1 µm was formed on each surface of the obtained colorant-dyed lens base, a silicone-based hard coat layer with a thickness of 2 µm was formed on the primer layer, a multilayer antireflection layer constituted of inorganic oxide with a thickness of 0.3 µm was formed on the hard coat layer by vacuum evaporation, thereby obtaining a spectacle lens of Example 1.

The plastic lens base above is a lens base containing a colorant as a bluing agent, that is, a blue light blocking lens base.

### [Comparative Example 1]

A spectacle lens of Comparative Example 1 was obtained by the same procedures as Example 1 except that the lens base was not dyed using a colorant liquid.

### [Comparative Example 2]

A spectacle lens of Comparative Example 2 was obtained by the same procedures as Example 1 except that the dying time (immersion time) of the lens base using the colorant liquid was extended to have the difference in luminous transmittance as shown in the table below.

### [Luminous transmittance, transmittance, and average transmittance]

For the lens bases, the colorant-dyed lens bases, and the spectacle lenses being measurement objects, the respective values were measured with a spectrophotometer (spectrophotometer U-4100, manufactured by Hitachi High-Tech Corporation) by the above-described methods.

FIG. 1 shows transmission spectra of the respective spectacle lenses in a wavelength range of 380 to 780 nm.

### [Contrast sensitivity]

A display showing a chart having indices of the letter "E" with different contrast ratios is disposed one meter away from a subject, the smallest contrast ratios of the indices that seven subjects wearing the respective spectacle lenses were able to identify with their both eyes were recorded, and the median thereof was obtained. The numeral value of the contrast ratio is an absolute value of the Weber contrast. As the smaller the contrast ratio of the index identified is, the more excellent the contrast sensitivity is.

The evaluation for the contrast sensitivity was performed under two environments of a bright place and a dark place. The bright place is the environment where the illuminance around the eyes of a subject is 500 lux, the color temperature is 5,000 K, and the luminance of the display is 250 cd/m², under LED (light-emitting diode) lighting. The dark place is the environment where the illuminance around the eyes of a subject is 15 lux, the color temperature is 2,500 K, and the luminance of the display is 28 cd/m², under LED lighting.

In the table, the "(A)" space presents a difference (absolute value) between the luminous transmittance of a lens base and the luminous transmittance of a colorant-dyed lens base.

The "(B)" space presents a difference (absolute value) between an average transmittance of a lens base in a wavelength range of 530 to 570 nm and an average transmittance of a colorant-dyed lens base in a wavelength range of 530 to 570 nm.

**[Table 1]**

| | Lens base | | Cobrant-dyed lens base | | (A) Difference in luminous transmittance [%] | (B) Difference in average transm ittance in 530^{~} 570 nm [%] | Spectacle lens | | | | | | Contrast ratio (Contrast sensitivity) | |
|---|---|---|---|---|---|---|---|---|---|---|---|---|---|---|
| | Lum inous transmittance [%] | Average transm ittance [%] | Lum inous transmittance [%] | Average transmittance [%] | | | Lum inous transmittance [%] | Transmittance [%] | Average transm ittance [%] | | | | Bright place | Dark |
| | | 530^{~} 570nm | | 530^{~} 570nm | | | | 400nm | 415^{~} 440 nm | 450^{~}500 nm | 530^{~} 570 nm | 600^{~} 650 nm | | |
| Example 1 | 87.7 | 87.9 | 86.0 | 85.3 | 1.7 | 2.6 | 93.2 | 0.02 | 66.6 | 95.6 | 92.2 | 96.2 | 0.16 | 0.25 |
| Com parative Example 1 | 87.7 | 88.0 | - | - | - | - | 94.7 | 0.02 | 72.6 | 96.3 | 93.9 | 96.8 | 0.20 | 0.31 |
| Com parative Example 2 | 87.7 | 87.5 | 80.3 | 77.2 | 7.4 | 10.3 | 86.7 | 0.02 | 67.9 | 90.0 | 83.2 | 95.0 | 0.17 | 0.30 |

The evaluation results in the table confirm that the spectacle lens of the present disclosure can improve the contrast sensitivity under both environments of the bright place and the dark place.

## Claims

1. A spectacle lens comprising a colorant-dyed lens base obtained by dying a lens base with a colorant,
wherein a difference between a luminous transmittance of the lens base and a luminous transmittance of the colorant-dyed lens base is 1.0% to 4.0%,
a difference between an average transmittance of the lens base in a wavelength range of 530 to 570 nm and an average transmittance of the colorant-dyed lens base in a wavelength range of 530 to 570 nm is 1.0% to 5.0%,
a transmittance of the spectacle lens at a wavelength of 400 nm is 2.0% or less, and
an average transmittance of the spectacle lens in a wavelength range of 415 to 440 nm is 40.0% to 80.0%.

2. A spectacle lens comprising a lens base and a functional layer containing a colorant,
wherein a difference between a luminous transmittance of the spectacle lens and a luminous transmittance of a reference lens obtained by removing the colorant from the spectacle lens is 1.0% to 4.0%,
a difference between an average transmittance of the spectacle lens in a wavelength range of 530 to 570 nm and an average transmittance of the reference lens in a wavelength range of 530 to 570 nm is 1.0% to 5.0%,
a transmittance of the spectacle lens at a wavelength of 400 nm is 2.0% or less, and
an average transmittance of the spectacle lens in a wavelength range of 415 to 440 nm is 40.0% to 80.0%.

3. A spectacle lens,
wherein a transmittance of the spectacle lens at a wavelength of 400 nm is 2.0% or less,
an average transmittance of the spectacle lens in a wavelength range of 415 to 440 nm is 40.0% to 80.0% or less, and
in the spectacle lens, an average transmittance in a wavelength range of 530 to 570 nm is lower than both an average transmittance in a wavelength range of 450 to 500 nm and an average transmittance in a wavelength range of 600 to 650 nm.

4. The spectacle lens according to any one of claims 1 to 3,
wherein in the spectacle lens, an average transmittance in a wavelength range of 530 to 570 nm is lower than both an average transmittance in a wavelength range of 450 to 500 nm and an average transmittance in a wavelength range of 600 to 650 nm by 2.0% or more.

5. The spectacle lens according to any one of claims 1 to 3,
wherein in the spectacle lens, an average transmittance in a wavelength range of 450 to 500 nm is 90.0% or more, an average transmittance in a wavelength range of 530 to 570 nm is 85.0% to 93.0%, and an average transmittance in a wavelength range of 600 to 650 nm is 90.0% or more.

6. The spectacle lens according to any one of claims 1 to 5,
wherein a luminous transmittance of the spectacle lens is 89.0% to 94.0%.
